# EUROPEAN PATENT SPECIFICATION

(11) **EP 4 488 467 B1**
(45) Date of publication and mention of the grant of the patent: **25.11.2026**
(21) Application number: 24184584.1
(22) Date of filing: 26.06.2024
(51) Int. Cl.: E04D 5/14, B29C 65/02, B29C 65/22, B29C 65/34, F24S 25/61, H02S 20/23, F24S 25/615, E04D 13/14, B29C 65/00

(54) **A SUPPORT UNIT AND A METHOD FOR FASTENING A STRUCTURE**
TRÄGEREINHEIT UND VERFAHREN ZUR BEFESTIGUNG EINER STRUKTUR
UNITÉ DE SUPPORT ET PROCÉDÉ DE FIXATION D'UNE STRUCTURE

(30) Priority: 03.07.2023 DK PA202330111
(43) Date of publication of application: 08.01.2025
(73) Proprietor: Spider-feet ApS, 9220 Aalborg Øst (DK)
(72) Inventor: Jensen, Jacob, Ullerup, 8700 Horsens (DK)
(74) Representative: Larsen & Birkeholm A/S

(56) References cited:
- DK-B1- 181 161
- JP-B2- 5 416 884
- US-A- 5 526 624
- US-A1- 2003 116 282
- US-A1- 2010 018 959
- US-A1- 2011 162 779
- US-A1- 2014 091 495
- US-A1- 2015 114 570

## Description

The present invention relates to support units used for mounting of structures on upward surfaces such as roofs or similar watertight surfaces. In particular, the present invention relates to fastening of a support unit to an upward surface without piercing the upward surface.

### Background of the invention

Within the latest decades it has been increasingly popular to install solar panel systems on roof surfaces, which roof surfaces may be on residential houses as well as office building in order to generate and supply electric power to the grid. Solar panel systems often comprise a plurality of individual solar panels being mounted on a frame. The frame itself may be mounted and fastened on the roof surface.

Some roof surfaces are made from tiles. Other roof surfaces are made from flexible asphalt roofing which is a composite material comprising a bituminous material admixed with fibres or granulate, such as an inorganic granulate, such as sand grains or small stones.

When a solar panel frame is installed on a roof made of asphalt roofing a plurality of support units made from steel are used. These support units comprise a surface onto which a bituminous layer has been provided. The steel support unit is "welded" to the asphalt roofing by softening/melting the material of the asphalt roofing at predetermined positions thereof and by softening/melting the bituminous layer on the support units and subsequently pressing the bituminous layer of the support unit into the softened/melted asphalt roofing. A blow torch is used for these softening/melting processes.

When a desired and necessary number of support units have been mounted on the roof in this way, the solar panel frame will be fastened to the support units and the individual solar panels can subsequently mounted on the solar panel frame.

This kind of "welding" the support units to the roof material have proven very efficient. The welds form strong adherence to the roofing material and the welding itself can be performed very fast.

Nevertheless, this prior art method of making the support units adhere to the asphalt roofing represents certain disadvantages.

One such disadvantage is that the use of a blow torch for softening/melting the bituminous material of the roof and of the support units alike represents a severe fire hazard. This is because that bitumen itself comprises long-chained aliphatic and aromatic chemical compounds which are flammable. Accordingly, in case the bitumen of a roof comprising asphalt roofing catches fire, that fire will be able to rapidly spread so that eventually the whole roof will be on fire.

Besides, the caution exhibited by a worker in an attempt to prevent starting a fire when using a blow torch for fastening the prior art types of support units may lead to insufficient melting of the bituminous layer of the brackets and of the bitumen of the roofing, and hence inadequate adhesion of that bracket to the asphalt roofing. All in all, the use of a blow torch for melting the bituminous layer of the prior art brackets may make it very difficult to dose the exact, sufficient and not excessive amount of heat.

An alternative way of fixing support units to an asphalt roofing will be to piece the asphalt roofing and screw or bolt the bracket into an underlying structure of the roofing. It is clear that piercing the asphalt roofing will imply risk of leaking of water to an area below the roof.

The document US2003116282 A1 relates to an adhesive attachment assembly provided for mounting an attachment member such as a threaded stud or the like onto a substrate. Often it is necessary to attach an element such as a patch, a threaded screw or other structure onto a supporting substrate which substrate may be the skin of an aircraft, the hull of a boat to repair a hole therein, a windshield of an automobile etc. The adhesive attachment comprises a base fixture (14) adapted for adhesive mounting onto a substrate (12), the base fixture 14 may be formed from metal, plastic or composite material and the base fixture (14) has a dish-like shape with a convex central part defining a shallow cavity (22). The base fixture (14) is unsuitable for supporting large and heavy structures as this may deform the dish-like base fixture (14).

The document US 2010018959 A1 relates to mounting of test hardware such as various instrumentation to a vehicle during testing. According to this document the test hardware should both be attached to the support surface and removed without leaving any trace. The heat provided by the heating element (3) may facilitate a reduction in cure time of the adhesive (24) bonding a bracket (38) to a structure (60). Alternatively, heat generated by the heating element (30) may be used to soften the adhesive (24) in order to facilitate removal of bracket (38) from the structure (60) (see paragraph [0036]). The device is not suitable for carrying a larger load in a vertical direction. The document DK181161 B1 illustrates a roof terrace assembly comprising a frame construction arranged to be supported above a roof of a building. The frame construction is arranged essentially in a horizontal plane and a plurality of support plates are arranged underneath the frame construction. Each of the support plates has a roof facing surface which is arranged to abut a roof when the roof terrace assembly is arranged on a roof, an adjustment mechanism is arranged between each support plate and the frame construction to allow the distance between the support plate and the frame construction to be adjusted and to allow the angle between the support plate and the frame construction to be adjusted. The roof terrace assembly allows for easy and fast installation of a roof terrace, but the support plates are attached to the roof surface by use of an external heating device such as a heat gun or open fire.

Accordingly, a need persists for improved technology for use when fixing a support unit or a support plate to an asphalt roofing, and it is an objective of the present invention to provide technology which overcomes the above problems.

### Summary of invention

A first aspect of the present invention relates to a support unit (100) comprising:
- a base element (2) comprising a base plate (22) having a first surface (4) facing downward towards a support surface and a second surface (24) facing at least partly upward which base element (2) either comprises or is fixed/attached to a fastening element (18),
- a layer (6) of a thermoplastic material having a first surface (8) and an opposite second surface (10), and at least one surface (8, 10) of the layer (6) of thermoplastic material is in contact with at least one surface (4, 24) of the base element (2),
the support unit (100) further comprises an electric heating element (12) which electric heating element (12) is arranged at, i.e. in contact with, the first (8) or second (10) surface of the layer (6) of thermoplastic material and is configured to melt the thermoplastic material.

According to an embodiment of the first aspect of the invention, the base element (2), or at least the surface closest to the electric heating element thereof, may be of a material capable of withstanding a temperature T of 150 °C, or 200 °C or above, such as 250 °C or above, such as 300°C or above, for example 350 °C or above, e.g. 400 °C or above, such as 450 °C or above, such as 500 °C or above.

According to an embodiment of the first aspect of the invention, the first surface 4 of the base element 2 may have an area of at least 25 cm², or at least 50 cm²or at least 75 cm², or at least 100 cm² or at least 150 cm², or at least 200 cm², or at least 300 cm², or at least 400 cm², or at least 500 cm², or at maximum 600 cm², or at maximum 700 cm², or at maximum 800 cm², or at maximum 900 cm², or at maximum 1000 cm², or at maximum 1250 cm²or at maximum 1500 cm², or at maximum 2000 cm² or at maximum 2500 cm².

According to an embodiment of the first aspect of the invention, the electric heating element (12) may be arranged at said second surface (10) of the layer (6) of thermoplastic material by means of being pressed into the material or by means of being fastened to the layer of thermoplastic material with an adhesive.

According to an embodiment of the first aspect of the invention, the material for the layer (6) of thermoplastic material may be selected from the group of materials of bitumen-based polymers such as bitumen itself, polyacrylate based thermoplastic polymer, polyether based thermoplastic polymer, polysulfone based thermoplastic polymer, polyester based thermoplastic polymer, vinyl-based polymer, mixtures thereof and/or co-polymers thereof.

According to an embodiment of the first aspect of the invention, the layer (6) of thermoplastic material may have dimensions i.e. area and a geometry so as to extend fully or partly beyond or above the outer circumference of the first surface (4) of the base element (2).

According to an embodiment of the first aspect of the invention, the fastening element (18) may comprise a protrusion (26) extending from the second surface (24) of the base plate (22), which protrusion (26) may comprise a through-going hole.

According to an embodiment of the first aspect of the invention, the fastening element (18) may comprise a spindle (26) comprising an external thread (30) and a spindle plate (28) comprising an internal thread (32), which external thread (30) and internal thread (32) may be adapted to each other, thereby allowing screwing the spindle plate (28) onto the spindle (26).

According to an embodiment of the first aspect of the invention, the electric heating element (12) may comprise an electric conductor (34) of an electric conducting material having an electric resistance, which electric conductor (34) optionally comprises a plurality of neighboring conductor segments (36a,36b,36c) being angled in relation to each other at an angle ≠ 180°.

According to an embodiment of the first aspect of the invention, the electric conductor (34) of the electric heating element (12) may have the shape of a serpentine, or a spiral, such as a double spiral.

According to an embodiment of the first aspect of the invention, the base element (2) and/or the fastening element (18), or at least part thereof, may be made of metal or alloy, such as iron, copper, steel, brass, bronze, or is/are being made from a plastic, such as a thermoplastic, optionally being injection molded into a predetermined shape; or may be made from composite material such as polyester reinforced fibers or epoxy reinforced fibers; such as glass fibers or carbon fibers, or may be made from wood.

According to an embodiment of the first aspect of the invention, the electric conductor (34) of the electric heating element (12) may comprise a material selected from the group of a metal or a metal alloy, such as iron, an iron alloy, such as steel, such as stainless steel, constantan or a nickel/chromium alloy, or copper or a copper alloy.

According to an embodiment of the first aspect of the invention, the support unit (100) may comprise a second layer (7) of a thermoplastic material which second layer (7) of a thermoplastic material may be arranged onto the heating element (12), thereby sandwiching the heating element (12) between the first layer (6) of a thermoplastic material and the second layer (7) of thermoplastic material, or alternatively, between the first surface (4) of the base element (2) and the second layer (7) of thermoplastic material. The second layer (7) of a thermoplastic material may have a thickness which is larger, or smaller or essentially equal to the thickness of said layer (6) of a thermoplastic material.

According to a second aspect, the invention relates to a method of fastening a structure (20) to an upward support such as a roof, said method comprises the steps of:
a) providing one or more support units (100) according to the first aspect;
b) arranging the support units (100) onto the upward surface at predetermined position(s),
c) in respect of one or more of the support units (100), applying electric power to the electric heating element (12) sufficient to melting at least part of the layer (6) of a thermoplastic material of the support unit (100) and of any second layer (7) of thermoplastic material of the support unit (100) if being present,
d) in respect of one or more of the support units (100), allowing the melted part of the layer (6) of thermoplastic material of the support unit (100) and of the second layer (7) of thermoplastic material of the support unit (100) if being present, to adhere to the upward surface;
e) in respect of one or more of the support units (100), allowing the melted part of the layer (6) of thermoplastic material of the support unit (100) and of the second layer (7) of thermoplastic material of the support unit (100) if being present, to cool and thereby at least partly harden,
f) in respect of one or more of the support units (100), disconnecting the electric power from the electric heating element (12),
g) mounting the structure (20) on top of one or more of the support units (100).

According to an embodiment of the second aspect of the invention, the structure (20) may be a frame configured to support a structure on a roof of a building, such as a balcony, a porch, a solar panel, an enclosure or a cover for technical installations, such as for ventilation.

According to a third aspect, the invention relates to a system comprising a structure (20) mounted on an upward surface and a support unit (100) according to the first aspect used for mounting the structure (20) on the upward surface.

### Brief description of the figures

Fig. 1 is a perspective view of a support unit according to the invention.
Fig. 2 is an exploded perspective view of the support unit illustrated in Fig. 1
Fig. 3 is a cross-sectional view illustrating the support unit illustrated in Fig. 1 and 2.
Fig. 4 is a side view illustrating the support unit illustrated in Fig. 1 - 3.
Fig. 5 is a plan bottom view illustrating a leak proofing pad useable in a method according to the second aspect of the present invention.
Fig. 6a is a plan view illustrating one embodiment of a heating element formed by an electrically conducting strip.
Fig. 6b is a plan view illustrating another embodiment of a heating element formed by an electrically conducting strip.
Fig. 6c is a plan view illustrating yet another embodiment of a heating element formed by an electrically conducting strip.
Fig. 7 is a cross-sectional view illustrating an embodiment of part of a support unit wherein the heating element is sandwiched between two layers of a thermoplastic material.
Fig. 8 is a perspective drawing illustrating a structure mounted on a plurality of support units according to the first aspect of the present invention.

### Detailed description of the invention

The present invention relates to a support unit 100 comprising a base element 2. A base element 2 of the support unit 100 according to the invention comprises a base plate 22 having a first surface 4 and an opposite second surface 24 where the first surface 4 faces an upward surface such as roof or the ground or a floor whereas the second surface 24 faces a structure 20 to be supported by one or more support units 100. When the support units 100 are configured to support a structure 20 on a roof or another high place, the support units 100 should not only be able to carry the weight of the structure, and preferably keep the structure 20 in a horizontal position if it is a terrace or similar, the support units 100 should also preferably provide a downward-force in order to prevent the structure 20 from being lifted away by upward air-flows.

A support unit 100 or a multiplicity of support units 100 according to the invention may be used to support a structure 20 such as a frame positioned on a roof of a building, or on a balcony, or on a porch, or a structure 20 may be used to support a solar panel, an enclosure or a cover for technical installations, such as for ventilation. Each structure 20 is normally supported by a multiplicity of support units 100, i.e. at least two support units 100 or at least four or more support units 100.

The first surface of the base plate 22 is adapted to correspond or fit to the upward surface on which it is to rest after mounting, the second surface 24 of the base plate 22 either comprises receiving means configured to receive fastening means 18 or comprises fastening means 18, i.e. either the fastening means 18 is attached to the receiving means during use or the fastening means 18 constitutes a permanent part of the base plate 22. During operation the fastening element(s) 18 fasten(s) the support unit 100 to the structure 20.

To fit to the upward surface, the first surface 4 of each base element 2 may be planar or it may be curved, or may comprise one or more edges, or it may comprise a combination of such geometries. In theory there are no limits to the geometry of the first surface 4 of the base element 2, what is important is to maximize contact between the first surface 4 of the base element 2 and the contact surface onto which the base plate 2 is to be mounted.

The first surface 4 of the base element 2 may have an area of between 25 - 2500 cm², such as between 50 - 2000 cm², for example 75 - 1500 cm², e.g. 100 - 1250 cm², for example 150 - 1000 cm cm², e.g. 200 - 900 cm², for example 300 - 800 cm², such as 400 - 700 cm² or 500 - 600 cm². Such areas of the first surface 4 of the base element 2 are suitable for most purposes. For a specific structure 20 supported by a specific number of support units 100, it is possible to calculate a minimum area of the first surface 4 of each/all base elements 2.

The first surface 4 of the base element 2 may comprise a solid surface i.e. without opening(s), also the first surface 4 and/or the base plate 22 may have an outer periphery in form of a circle, an oval, a rectangle, a polygon or any other shape. The first surface 4 and/or the base plate 22 of the base element 2 may also comprise openings i.e. through-going holes which allows material to flow through the base plate 22 e.g. the base plate 22 may be in form of a lattice, optionally the base plate 22 may be solid and in shape of a H or a X or a L or a T, or the base plate 22 may be shaped as a solid surface comprising indentations at the edge e.g. as a star-shape or having radially extending parts from a central point or circle.

In general, the base plate 22 and the base element 2 normally comprises a material or a combination of materials capable of withstanding a temperature T of 200 °C or above, or such as 250 °C or above, or such as 300°C or above, for example 350 °C or above, e.g. 400 °C or above, or such as 450 °C or above, or such as 500 °C or above. This choice of material means that such high temperatures can be applied to the base element 2 without risking structural disintegration of the base element 2.

The support unit 100 further comprises a layer 6 of a thermoplastic material having a first surface 8 and an opposite second surface 10 where the first surface 8 faces upward during use and the second surface 10 faces downward during use i.e. after mounting of the support unit 100 to a support.

The layer 6 of thermoplastic material may be selected from the group of materials comprising: bitumen-based polymer, such as bitumen itself, polyacrylate based thermoplastic polymer, polyether based thermoplastic polymer, polysulfone based thermoplastic polymer, polyester based thermoplastic polymer, vinyl-based polymer, mixtures thereof and/or co-polymers thereof. Many thermoplastic materials may be suitable for the intended purpose, what is needed for a thermoplastic materials in the context of the present invention is that the material may transition from having a relatively hard or solid texture in a cold state where a cold state is considered ambient temperature e.g. below 40°C, compared to a situation where the thermoplastic material is heated, and the material becomes soft or even liquid and in the softened and/or liquid state the thermoplastic material must exhibit a degree of adhesive power or be able to unite with the material of the support e.g. by a kind of welding.

The thickness of the layer 6 of thermoplastic material may be selected from the ranges of 0.5 - 30 mm or more, such as 1.0 - 25 mm, for example 1.5 - 20 mm or more, such as 2 - 19 mm, for example 3 - 18 mm, such as 4 - 17 mm, 5-16 mm, e.g. 6 - 15 mm, such as 7 - 14 mm, such as 8 - 13 mm, such as 9 - 12 mm, or 10 - 11 mm. These thicknesses provide for adequate bonding between the layer 6 of thermoplastic material and the surface of the support onto which it is going to be mounted.

The layer 6 of thermoplastic material extends over an area and a geometry so as to extend fully or partly above or beyond an outer circumference of the base plate 22 and the layer 6 of thermoplastic material may either be attached from above the base plate 22 and joined to the second surface 24 of the base plate 22 or the layer 6 of thermoplastic material may be attached to the lower or first surface 4 of the base plate 22.

If the layer 6 is attached to the base plate 22 from above, the base plate 22 may be joined to or be part of the electric heating element 12. Alternatively, the heating parts of the electric heating element 12 may be adapted in size and shape to the parts of the layer 6 which extends beyond the base plate 22 or may get in contact with the support through openings in the base plate 22. Normally, the layer 6 of thermoplastic material covers an area larger than the first and second surfaces 4, 24 of the baseplate 22.

Normally the outer perimeter of the layer 6 of thermoplastic material is larger than the outer perimeter of the first surface 4 of the base element 2.

The support unit 100 also comprises an electric heating element 12 which can be connected to electric power source. The electric heating element 12 may comprise a first electric connection 14 and a second electric connection 16 supplying electric power thereto. The electric power source is connected to the electric heating element 12 during fastening of the support unit 100 when the layer 6 of thermoplastic material is heated to a melting point.

In general, the layer 6 of thermoplastic material may provide a liquid tight layer, meaning that the layer 6 of thermoplastic material is without holes or openings providing a coherent layer either between the electric heating element 12 and the base element 2 or around the fastening means 18 of the base element 2.

When the layer 6 of thermoplastic material is positioned below the first surface 4 of the base element, the first surface 8 of the layer 6 of thermoplastic material is adhered to the first surface 4 of the base element 2, and the electric heating element 12 is arranged at and in contact with the second surface 10 of the layer 6 of thermoplastic material. The electric heating element 12 supplies heat to the layer 6 of a thermoplastic material during mounting, hereby the layer 6 of thermoplastic material may be safely at least partly melted without using open fire in form of a blow torch or the like.

The base element 2 may comprise receiving means for the fastening element 18 which receiving means may be in form of a bushing 40 or the like suitable for attachment of the fastening element 18, or the base element 2 may comprise the complete fastening element 18. The base element 2 including the base plate 22 and a part of or the complete fastening element 18, may be created as a single unit e.g. by molding, welding or another method by which a part of the fastening element 18 is joined irreversibly or reversibly to the base plate 22.

The base element 2 and/or the fastening element 18, or at least part of either the base element 2 and/or the fastening element 18, may be made of metal or alloy, such as iron, copper, steel, brass, bronze, or may be made of a plastic, such as a thermoplastic, optionally a plastic injection molded into a predetermined shape; or may be made from a composite material such as fiber reinforced polyester or fibers; where the fibers may be glass fibers or carbon fibers, or fibers made from organic material such as wood. These materials are strong and sturdy and are suitable for the intended purpose.

The fastening element 18 may comprise a protrusion 26 extending from the second surface 24 of the base plate 22 of the base element 2. The protrusion 26 may comprise an internal longitudinal opening e.g. with an internal thread, which internal longitudinal opening may allow for bolting a structure to the support unit 100.

The protrusion 26 of the fastening element 18 may alternatively comprise and external thread 30 and then the fastening element 18 comprises a spindle 26 and a spindle plate 28which spindle plate 28 comprises an internal thread 32. The external thread 30 and the internal thread 32 are adapted to each other, thereby allowing screwing the spindle plate 28 onto the spindle 26.

This combination of spindle 26 and spindle plate 28 allows for adjusting the distance between the spindle plate 28 carrying a structure 20 and the base element 2 supported by a support such as a roof surface.

The electric heating element 12 may comprise an electric conductor 34 of an electric conducting material having an electric resistance, wherein the electric conductor 34 optionally comprises a plurality of neighboring conductor segments 36a,36b,36c which are being angled in relation to each other at an angle ≠ 180°.

It may be ensured that a uniform amount of heat is supplied by the heating element 12 to the layer 6 of a thermoplastic material. Providing the electric heating element 12 with such neighboring conductor segments 36a,36b,36c may ensure this.

The electric conductor 34 may comprise a wire 34a or a strip 34b of an electric conducting material having an electric resistance.

A wire will typically have a round or square-like cross-section, whereas a strip will typically have a flat cross-section, in such a way that the cross-sectional extension of the strip in a first direction is several times the cross-sectional extension of the strip in a second direction perpendicular to the first direction.

The electric conductor 34 of the electric heating element 12 may have the shape of a serpentine, a spiral, such as a double spiral.

These geometries of the electric conductor 34 of the electric heating element 12 provides for good coverage on the layer 6 of the thermoplastic material as well as a uniform supply of heat to the layer 6 of the thermoplastic material.

The electric conductor 34 of an electric conducting material may comprise a material having a specific electric resistivity of 0.1-1.0 x 10⁻⁶ Ωm, such as 0.2 - 0.9 x 10⁻⁶ Ωm, for example 0.3 - 0.8 x 10⁻⁶ Ωm, e.g 0.4 - 0.7 x 10⁻⁶ Ωm or 0.5 - 0.6 x 10⁻⁶ Ωm.

These specific electric resistivities allows for a suitable heat dissipation in the electric heating element 12 by using a safe and relative low voltage supply of below 50 V.

The electric conductor 34 of an electric conducting material may have a thickness of 0.1- 3 mm, such as 0.2 - 2.9 mm, for example 0.3 - 2.8 mm, such as 0.4 - 2.7 mm, such as 0.5 - 2.6 mm, for example 0.6 - 2.5 mm, e.g. 0.7 - 2.4 mm, such as 0. 8 - 2.3 mm, for example 0.9 - 2.2 mm, e.g. 1.0 - 2.1 mm, such as 1.1- 2.0 mm, such as 1.2 - 1.9 mm, for example 1.3 - 1.8 mm, 1.4 -1.7 mm, such as 1.5 - 1.6 mm. These thicknesses have proven suitable for the intended purpose of the electric heating element 12.

The electric conductor 34 of an electric conducting material may have a cross-sectional area of 0.005 - 10 mm², such as 0.008 - 8 mm², for example 0.01 - 7 mm², e.g. 0.05 - 6 mm², such as 0.1- 5 mm² , for example 0.2 - 4 mm², such as 0.3 - 3 mm² , e.g. 0.4 - 2 mm² , such as 0.5 - 1.5 mm² , such as 0.6 - 1.4 mm² for example 0.7 - 1.3 mm², e.g. 0.8 - 1.2 mm² or 0.9 -1.1 mm². These cross-sectional areas of the electric conductor 34 of the electric heating element 12 have proven suitable for the intended purpose.

The maximum distance between any two nearest adjacent segments 38a,38b of the electric conductor 34 may be 5 - 35 mm, such as 8 - 30 mm, for example 10 - 25 mm, such as 15 - 20 mm. These distances of segments of the electric conductor 34 of the electric heating element 12 provides for good coverage on the layer 6 of the thermoplastic material as well as a uniform supply of heat to the layer 6 of the thermoplastic material.

The distance of any point at the second surface 10 of the layer 6 of thermoplastic material, which is located within the outer perimeter of the electric conductor 34 arranged on the surface 10 of the layer 6 of thermoplastic material, to the nearest portion of the electric conductor 34 of an electric conducting material may be 2 - 19 mm, such as 3 - 18 mm, e.g. 4 - 17 mm, 5-16 mm, such as 6 - 15 mm, for example 7 - 14 mm, e.g. 8 - 13 mm, such as 9 - 12 mm or 10 - 11 mm. These distances of segments of the electric conductor 34 of the electric heating element 12 provides for good coverage on the layer 6 of the thermoplastic material as well as a uniform supply of heat to the layer 6 of the thermoplastic material.

The electric conductor 34 of the electric heating element 12 may comprise or be constituted of a material selected from the group of a metal or a metal alloy, such as iron, an iron alloy, such as steel, such as stainless steel, constantan or a nickel/chromium alloy, or copper or a copper alloy. These materials have proven beneficial for the intended purpose of acting as a heating element.

The electric heating element 12 may be arranged at the second surface 10 of the layer 6 of thermoplastic material by means of being pressing the electric heating element 12 into the material or by means of fastening the electric heating element 12 to the layer 6 of thermoplastic material with an adhesive. Use of fastening means assures that the heating element 12 stays in place on the surface of the layer 6 of the thermoplastic material during handling of the support unit 100.

The fastening element 18 may be in the form of a support supporting a structure 20 on a roof of a building, such as a balcony, a porch, a solar panel, an enclosure or a cover for technical installations, such as for ventilation; or wherein the fastening element 18 is being in the form of a safety bracket for mounting of a safety line for an individual with the view to avoid fall accidents involving falling off a roof of a building.

The support unit 100 may comprise a second layer 7 of a thermoplastic material, which second layer 7 of a thermoplastic material may be arranged onto the heating element 12, thereby sandwiching the heating element 12 between the first layer 6 and the second layer 7 of a thermoplastic material, optionally in such a way that the heating element 12 is partially or fully embedded in the layer 6 of a thermoplastic material and the second layer 7 of a thermoplastic material.

A second layer 7 of a thermoplastic material may protect the electric conductor 34 of the electric heating element 12 from mechanical impact and damages before and during mounting of the support unit 100.

The second layer 7 of a thermoplastic material may have a thickness which is larger, smaller or essentially equal to the thickness of the layer 6 of a thermoplastic material.

The present invention also relates to a method of manufacturing a support unit 100 according to the first aspect which method comprises the steps of:
i) providing a base element 2 having a lower surface 4;
ii) providing a layer 6 of a thermoplastic material having a first surface 8 and an opposite second surface 10;
iii) providing an electric heating element 12 comprising a first electric connection 14 and a second electric connection 16 for supplying electric power thereto;
iv) fastening the first surface 8 of the layer 6 of a thermoplastic material to the lower surface 4 of the base element 2;
v) fastening the electric heating element 12 to the second surface 10 of the layer 6 of thermoplastic material, such as by pressing the electric heating element 12 into the thermoplastic material or by use of an adhesive.

Step iv) may be performed by arranging the layer 6 of a thermoplastic material onto the lower surface 4 of the base element 2 and subsequently heating thereof, such as by a blow torch or by a furnace; or wherein step iv) is performed by heating the layer 6 of thermoplastic material, such as a blow torch or by a furnace and subsequently arranging the layer 6 of a thermoplastic material onto the lower surface 4 of the base element 2.

Step v) may be followed by:
vi) fastening a second layer 7 of a thermoplastic material to the heating element 12 or at least part thereof.

Hereby, the heating element 12 or at least part thereof will be sandwiched between two layers of a thermoplastic material.

An electric power supply for providing electric power to the electric heating element 12 should be capable of delivering an electric power of 10 - 1000 W, such as 15 - 900 W, for example 20 - 850 W, such as 25 - 800 W, for example 50 - 750 W, such as 75 - 700 W, for example 100 - 650 W, such as 150 - 600 W, such as 200 - 550 W, for example 250 - 500 W, such as 300 - 450 W or 350 - 400 W; optionally independently at a voltage of 2 - 50 V or more, e.g. 4 - 45 V, such as 6 - 40 V, such as 8 - 35 V, e.g. 10 - 30 V, such as 12 - 25 V, e.g. 14 - 10 V or 16-18 V.

A method for fastening a structure 20 to a roof of a building, may comprise the following steps:
a) providing one or more support units 100 according to the present invention;
b) arranging the one, two, three, four or more support unit onto the surface of the roof at predetermined position(s) providing adequate support for the structure 20;
c) in respect of one or more of the support units 100, applying electric power to the electric heating element 12 which is sufficient to soften and/or melting at least part of the layer 6 of a thermoplastic material of the support unit and of an optional second layer 7 of a thermoplastic material of the support unit,
d) in respect of one or more of the support units 100, allowing the softened and/or melted part of the layer 6 of a thermoplastic material of the support unit and of the optional second layer 7 of a thermoplastic material of the support unit to adhere to a corresponding surface of the roof;
e) in respect of one or more of the support units 100, allowing the softened and/or melted part of the layer 6 of a thermoplastic material of the support unit and of the optional second layer 7 of a thermoplastic material of the support unit to cool and thereby at least partly harden;
f) in respect of one or more of the support units 100, disconnecting the electric power from the electric heating element 12;
g) mounting the structure 20 to one or more of the one or more of the support units 100.

The structure 20 may be a frame for supporting a structure on a roof of a building, such as a balcony, a porch, a solar panel, an enclosure or a cover for technical installations, such as for ventilation.

### Detailed description of figures

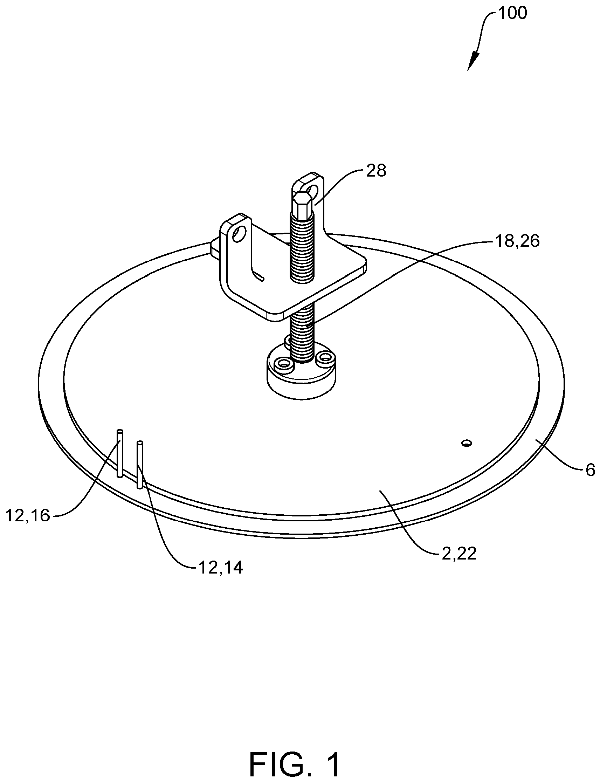

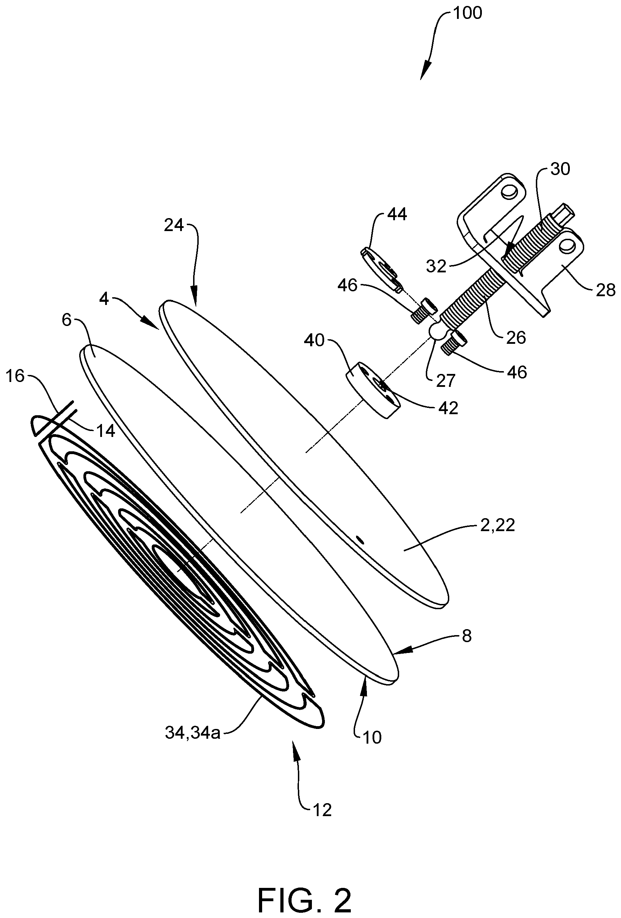

Fig. 1 shows a perspective view of an embodiment of a support unit 100 according to the invention and fig. 2 shows an exploded perspective view of the same embodiment of a support unit as illustrated in Fig. 1.

The support unit 100 of the shown embodiment comprises a base element 2 comprising a circular base plate 22 having a first surface 4 and an opposite second surface 24. On the second surface 24 of the base plate 22 is arranged a cylindrical bushing 40 for a fastening element 18. The bushing 40 comprises a central hole or opening 42 and may be fastened to the base plate 22 by welding or during molding.

The fastening element 18 a protrusion in form of a spindle 26 comprising an external thread 30, a spindle plate 28 having an internal thread 32 may be screwed onto the external thread 30 of the spindle 26 of the fastening element 18. At the end closest to the base plate after mounting, the spindle 26 comprises a ball end 27 which fits into the hole 42 of the bushing 40. Once the ball end 27 of the spindle is fitted into the hole 42 of the bushing, the spindle 26 may be fastened to the bushing 40 by a locking ring 44 which is positioned on top of the bushing 40 and bolted to the bushing 40 with three bolts 46.

The base plate 22 is planar and circular, approximately cylindrical, and the bushing 40 is placed cocentric to the circular base plate 22.

A layer 6 of a thermoplastic material in the form of a layer of bitumen having a first surface 8 and a second opposite surface 10 is arranged and/or attached to the first surface 4 of the base plate 22 in such a way that the first surface 4 of the base plate 2 and the first surface 8 of the layer 6 of thermoplastic material is in close contact. An electric heating element 12 is arranged and/or fastened to the second surface 10 of the layer 6 of bitumen comprising, the electric heating element 12 comprises an electric conductor 34 shaped in a layer and being equally distributed along the second surface of the thermoplastic layer 6, the electrically conducting wire 34a has a first electric connection 14 and a second electric connection 16 supplying electric power thereto.

Optionally, a second layer 7 of thermoplastic material e.g. also bitumen, may be arranged on the opposite surface of the electric heating element 12 in such a way that the electric heating element 12 is sandwiched between the first layer 6 and the second layer 7 of thermoplastic material.

Alternatively, an electric heating element 12 having first electric connection 14 and a second electric connection 16 for supplying electric power thereto may be arranged between the base plate 22 and the layer 6 of bitumen.

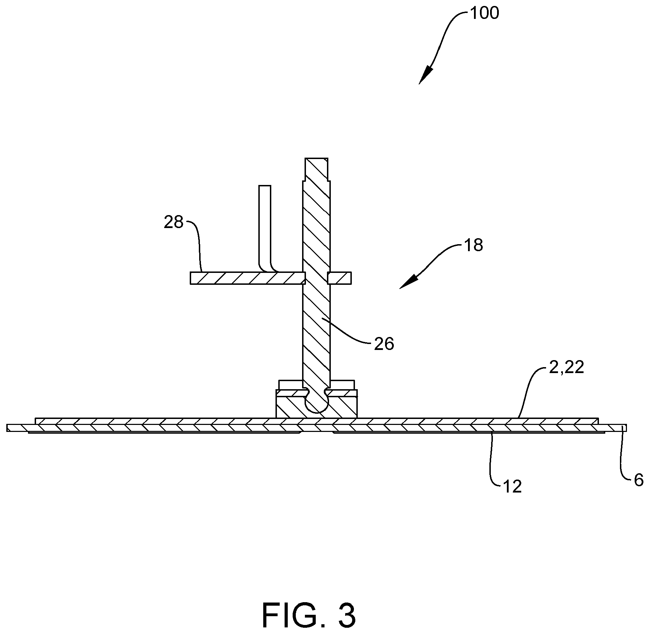

Fig. 3 is a cross-sectional view showing the same embodiment of the support unit 100 illustrated in Fig. 1 and 2.

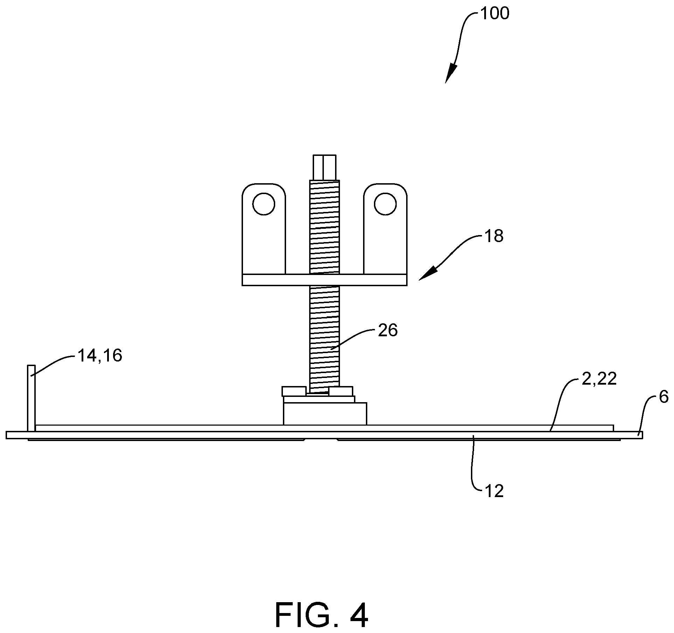

Fig. 4 is a side view illustrating the same embodiment of the support unit illustrated in Fig. 1- 3.

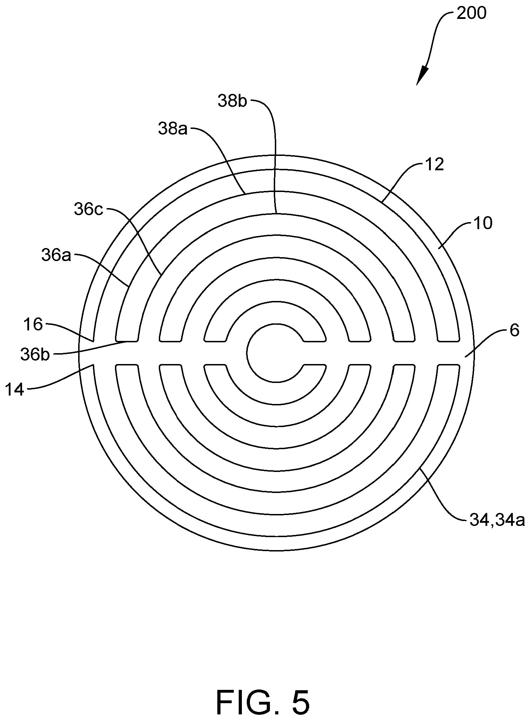

Fig. 5 shows an electric heating element 12 mounted onto the second surface 10 of the layer 6 of a thermoplastic material. It is seen that the heating element 12 comprises an electrically conducting wire 34a of an electrically conducting material. The electric heating element 12 is shaped into a serpentine shape. The serpentine shape comprises a plurality of consecutive wire segments 36a,36b,36c where two consecutive wire segments are angled in relation to each other. Hereby the distance between adjacent wire segments can be selected to have a magnitude which endure adequate heat delivery to each portion of the layer of the thermoplastic material.

Two consecutive wire segments may be defined as two portions of wire of the heating element which are oriented with an angle in relation to each other and connected end-to-end in relation to each other.

Two adjacent wire segments may be defined as two wire segments that are separated by an area empty of or without wire segments and optionally having essentially the same orientation. In Fig. 5 the wire segments 38a and 38b are adjacent wire segments.

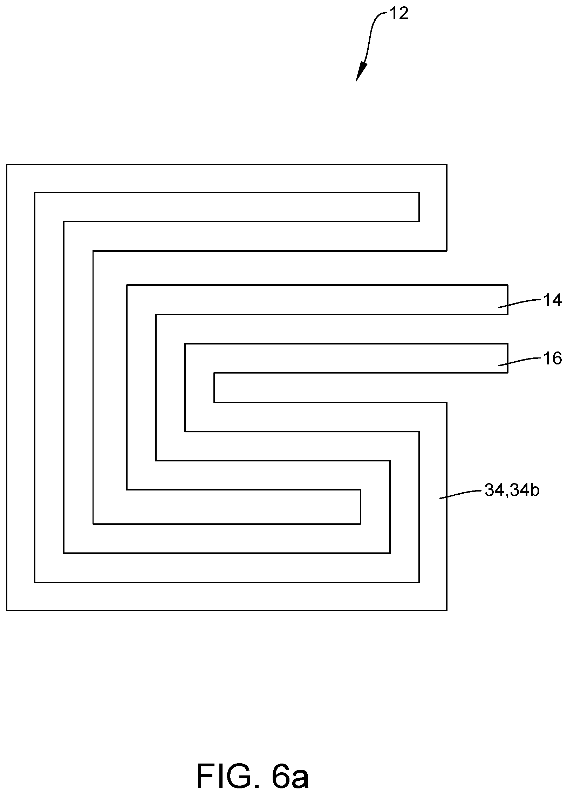

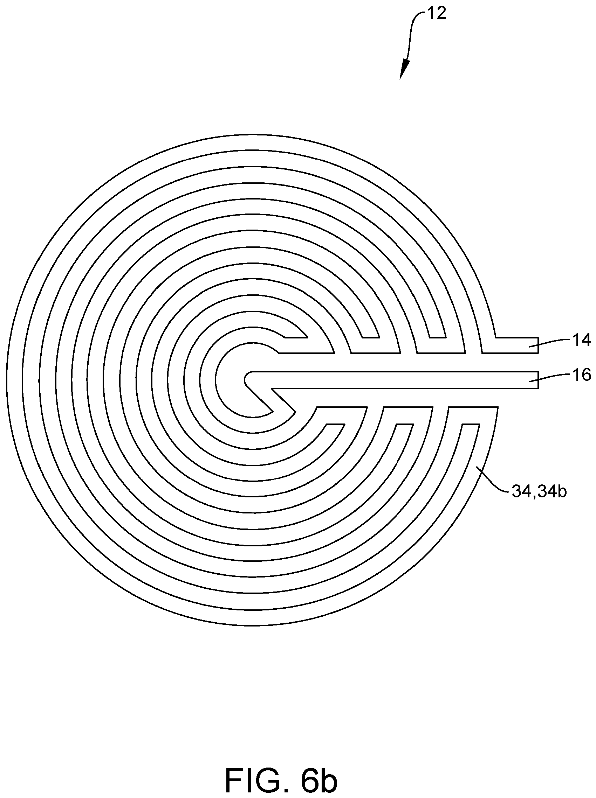

Fig. 6a is a plan view illustrating one embodiment of a heating element formed by an electrically conducting strip. Fig. 6b is a plan view illustrating another embodiment of a heating element formed by an electrically conducting strip.

Fig. 6a and 6b each shows an electrically conducting strip 34b having two electric connections 14,16 and each of the electrically conducting strip 34b forms a serpentine path therebetween.

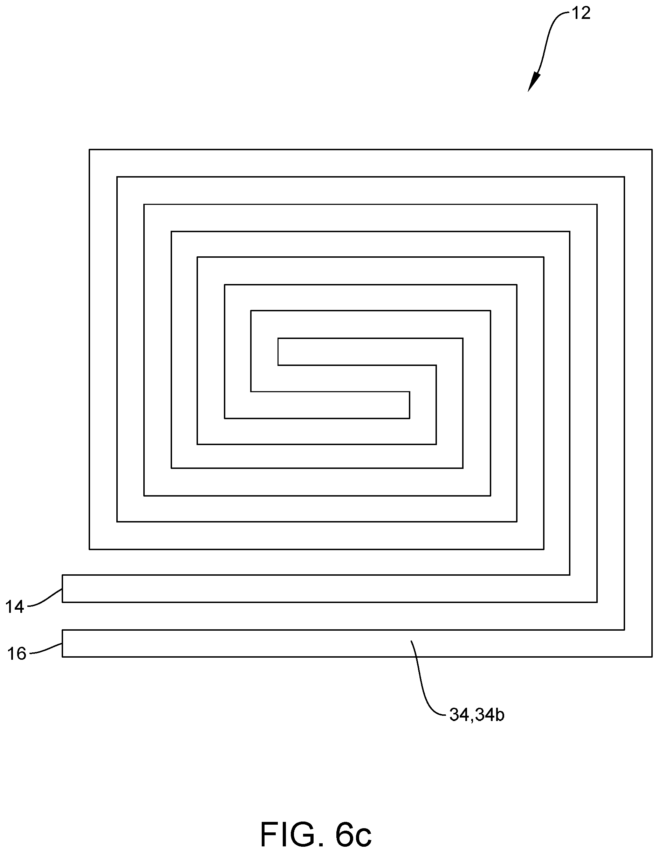

Fig. 6c is a plan view illustrating yet another embodiment of a heating element 12 formed by an electrically conducting strip 34. Fig. 6c shows an electrically conducting strip 34b having two electric connections 14,16 wherein the electrically conducting strip 34b forms a "double spiral".

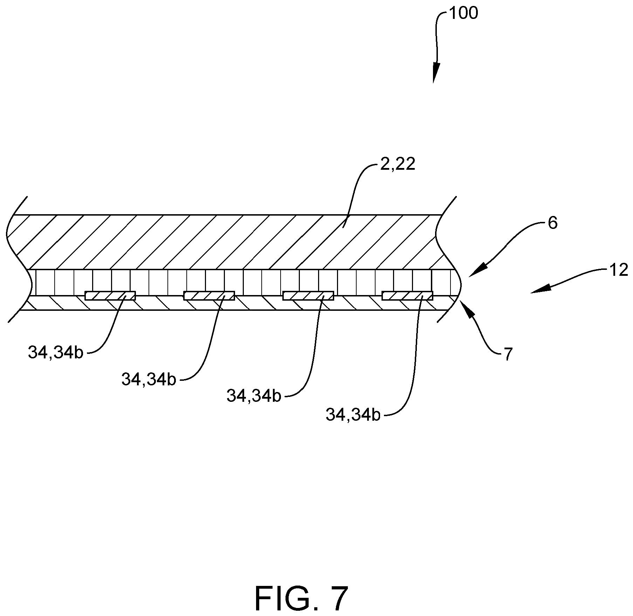

Fig. 7 is a cross-sectional view of an embodiment of a support unit wherein the heating element is sandwiched between two layers 6 and 7 of a thermoplastic material. In Fig. 7, the support unit 100 comprises a base plate 2 and a layer 6 of a thermoplastic material adhered thereto. An electric heating element 12 comprising an electrically conducting strip 34 has been pressed or melted or otherwise attached to the layer 6 of thermoplastic material. A second layer 7 of a thermoplastic material is arranged on the opposite surface of the electric heating element 12. In this way, the electric heating element 12 is sandwiched between the first layer 6 of a thermoplastic material and the second layer 7 of a thermoplastic material in such a way that the electric heating element 12 may be embedded in the layers 6 and 7 of the thermoplastic material when the thermoplastic material is softened.

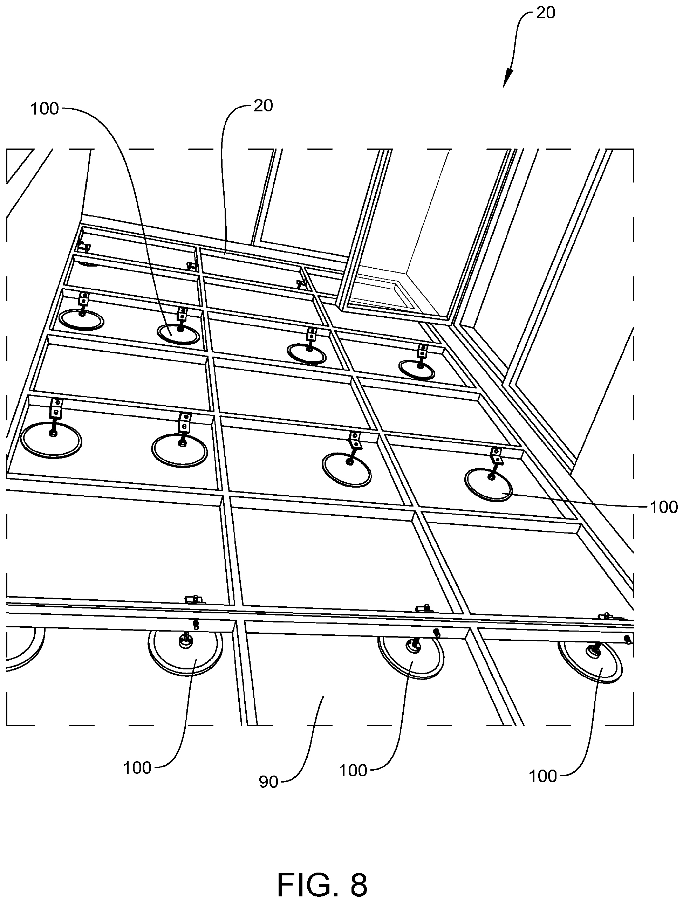

Fig. 8 is a perspective drawing illustrating a structure 20 mounted on a plurality of support units according to the invention. Fig. 8 shows a roof surface 90 onto which a plurality of support units 100 is mounted. A structure 20 in the form of a frame is positioned on top of the support units 100 and then fastened to the fastening element 18 of the support units 100. Before and/or after positioning the structure 20 on the support units 100, each support unit 100 may be individually adapted to fit in distance between the rigid structure 20 and the rigid roof surface 90.

The structure 20 may provide a foundation for a wooden flooring e.g. for a balcony.

### Working examples

### Example 1 - Manufacture of a support unit according to the invention

This example illustrates a manufacture process for the manufacture of the support unit illustrated in Fig. 1 - 4.

The support unit comprises a base plate 22, a layer of a bituminous material 6 and a heating element 12. The base plate 22 is made of corrosion resistant steel and is having a circular shape with a diameter of 245 mm and a thickness of 4 mm.

To the second surface 24 of the base plate 22 is welded a bushing 40 having a hole 42. A spindle 26 comprising a ball end 27 of corrosion resistant steel having an external thread 30 has its ball end 27 inserted into the hole 42 of the bushing 40. A locking ring 44 of corrosion resistant steel is placed around the spindle 26 and locked to the bushing with three bolts 46 of corrosion resistant steel.

Finally, a spindle plate 28 of corrosion resistant steel with an internal thread 32 adapted to the external thread 30 of the spindle 26, is mounted onto the spindle 26 by rotation so that the two threads 30,32 engage with each other.

To the first surface 4 of the base plate 22 is mounted a layer 6 of bituminous material in the form of a circular pad having a diameter of 270 mm and a thickness of 2 mm. The layer 6 of bituminous material may be adhered to the base plate 22 by using a blow torch in order to soften and increase adherence of the bituminous layer and subsequent adhering this softened layer 6 to the base plate 22.

The bituminous layer 6 is arranged concentrically in relation to the base plate 22.

Finally, a heating element 12 made from constantan wire having a total length of 3 m and having a diameter of 1.2 mm is formed to the pattern shown in Fig. 5. The maximum diameter of the heating element is 260 mm. The heating element 12 is subsequently pressed into the lower surface 10 of the bituminous layer 6 so that it is essentially concentrically arranged relative to the bituminous layer.

This step finalizes the manufacture of the support unit 100.

### Example 2 - Adhering the support unit of Example 1 to an asphalt roofing

A support unit 100 of Example 1 is arranged on top of an asphalt roofing 90 at a desired position and with the lower surface 10 of the bituminous layer 6 and the heating wire 12 face down.

A power supply supplying a voltage of 6 volts is electrically connected to the electric connections 14,16 of the wire of the heating element 34 and power is switched on. A current of 15 A is registered. The power supply is being electrically connected to the heating element for 2 minutes.

After this period of time the support unit 100 has been safely "welded" onto the surface of the asphalt roofing 90.

### Example 3 - Mounting a structure to a plurality of support units.

A plurality of support units 100 of example 1 are mounted at predetermined positions on top of an asphalt roofing 90 according to the method of Example 2.

A structure 20 in the form of a frame for a foundation for a flooring is then arranged on top of the spindle plate 28 of each of the support units 100 and attached thereto with bolts and nuts.

This leads to the situation illustrated in Fig. 6.

Subsequently a wooden flooring comprising a plurality of wooden planks may be mounted to the structure 20 (not shown in the figures).

| **Ref. no.** | **Name** |
|---|---|
| 2 | Base element |
| 4 | First surface of base plate 22 |
| 6 | First layer of thermoplastic material |
| 7 | Second layer of thermoplastic material |
| 8 | First surface of thermoplastic material layer 6 |
| 10 | Second surface of thermoplastic material layer 6 |
| 12 | Electric heating element |
| 14 | First electric connection |
| 16 | Second electric connection |
| 18 | Fastening element |
| 20 | Structure |
| 22 | Base plate of base element |
| 24 | Second surface of base plate 22 |
| 26 | Protrusion, spindle |
| 27 | Ball end |
| 28 | Spindle plate |
| 30 | External thread of protrusion 26 |
| 32 | Internal thread of spindle plate 28 |
| 34 | Electric conductor |
| 34a, 34b | |
| 36a, 36b, 36c | Consecutive conductor segments |
| 38a, 38b | Nearest adjacent segments of electric conductor 34 |
| 40 | Bushing |
| 42 | Hole in bushing |
| 44 | Locking ring |
| 46 | Bolts for locking ring |
| 90 | Roof |
| 100 | Support unit |

## Claims

1. A support unit (100) for mounting a structure on an upward surface comprising:
- a base element (2) comprising a base plate (22) having a first surface (4) facing downward towards a support surface and a second surface (24) facing at least partly upward which base element (2) either comprises or is fixed/attached to a fastening element (18),
- a layer (6) of a thermoplastic material having a first surface (8) and an opposite second surface (10), and at least one surface (8, 10) of the layer (6) of thermoplastic material is in contact with at least one surface (4, 24) of the base element (2),
wherein the support unit (100) further comprises an electric heating element (12) which electric heating element (12) is arranged at and in contact with, the first (8) or second (10) surface of the layer (6) of thermoplastic material and is configured to melt the thermoplastic material.

2. A support unit (100) according to claim 1, wherein the base element (2), or at least the surface closest to the electric heating element thereof, is of a material capable of withstanding a temperature T of at least 150 °C or of at least 200 °C, such as 250 °C or above, such as 300°C or above, for example 350 °C or above, e.g. 400 °C or above, such as 450 °C or above, such as 500 °C or above.

3. A support unit (100) according to any previous claim, wherein the first surface (4) of the base element (2) has an area of between 25 - 2500 cm², such as between 50 - 2000 cm², for example 75 - 1500 cm², e.g. 100 - 1250 cm², for example 150 - 1000 cm cm², e.g. 200 - 900 cm², for example 300 - 800 cm², such as 400 - 700 cm² or 500 - 600 cm².

4. A support unit (100) according to any previous claim, wherein the electric heating element (12) is arranged at the second surface (10) of the layer (6) of thermoplastic material by means of being pressed into said material or by means of being fastened to said layer of thermoplastic material with an adhesive.

5. A support unit (100) according to any previous claim, wherein the material for the layer (6) of thermoplastic material is selected from the group of materials of: bitumen-based polymers such as bitumen itself, polyacrylate based thermoplastic polymer, polyether based thermoplastic polymer, polysulfone based thermoplastic polymer, polyester based thermoplastic polymer, vinyl-based polymer, mixtures thereof and/or co-polymers thereof.

6. A support unit (100) according to any previous claim, wherein the layer (6) of thermoplastic material has dimensions i.e. area and a geometry so as to extend fully or partly beyond or above the outer circumference of the first surface (4) of said base element (2).

7. A support unit (100) according to any previous claim, wherein the fastening element (18) comprises a spindle (26) comprising an external thread (30) and a spindle plate (28) comprising an internal thread (32), which external thread (30) and said internal thread (32) are adapted to each other, thereby allowing screwing said spindle plate (28) onto said spindle (26).

8. A support unit (100) according to any previous claim, wherein the base element (2) and/or said fastening element (18), or at least part thereof, is/are being made of metal or alloy, such as iron, copper, steel, brass, bronze, or is/are being made from a plastic, such as a thermoplastic, optionally being injection molded into a predetermined shape; or is/are being made from composite material such as polyester reinforced fibers or epoxy reinforced fibers; such as glass fibers or carbon fibers, or is/are being made from wood.

9. A support unit (100) according to any of the preceding claims comprising a second layer (7) of a thermoplastic material which second layer (7) of a thermoplastic material is arranged onto the heating element (12), thereby sandwiching said heating element (12) between the first layer (6) of a thermoplastic material and the second layer (7) of thermoplastic material, or alternatively, between the first surface (4) of the base element (2) and the second layer (7) of thermoplastic material.

10. A support unit (100) according to any of the preceding claims wherein the thickness of the layer (6) of thermoplastic material is selected from the range of 0.5 - 30 mm, or 1.0 - 25 mm, or 1.5 - 20 mm, or 2 - 19 mm, or 3 - 18 mm, or 4 - 17 mm, 5 - 16 mm, or 6 - 15 mm, or 7 - 14 mm, or 8 - 13 mm, or 9 - 12 mm, or 10 - 11 mm.

11. A system comprising a structure mounted on an upward surface and a support unit according to one of the claims 1-9 used for mounting the structure on the upward surface.

12. A method of fastening a structure (20) to an upward support such as a roof, said method comprises the steps of:
a) providing one or more support units (100) according to any of the claims 1 - 9;
b) in respect of one or more of said one or more support units (100), arranging said support units (100) onto the upward surface at predetermined position(s),
c) in respect of one or more of said support units (100), applying electric power to the electric heating element (12) sufficient to melting at least part of the layer (6) of a thermoplastic material of the support unit (100) and of any second layer (7) of thermoplastic material of the support unit (100) if being present,
d) in respect of one or more of said support units (100), allowing said melted part of the layer (6) of thermoplastic material of the support unit (100) and of the second layer (7) of thermoplastic material of the support unit (100) if being present, to bond to the upward surface;
e) in respect of one or more of the support units (100), allowing said melted part of the layer (6) of thermoplastic material of the support unit (100) and of the second layer (7) of thermoplastic material of the support unit (100) if being present, to cool and thereby at least partly harden,
f) in respect of one or more of the support units (100), disconnecting the electric power from the electric heating element (12),
g) mounting the structure (20) on top of one or more of the support units (100).

## Patentansprüche

1. Trägereinheit (100) zum Montieren einer Struktur an einer nach oben gerichteten Oberfläche, umfassend:
- ein Basiselement (2), umfassend eine Basisplatte (22), die eine erste Oberfläche (4), die nach unten in Richtung einer Trägeroberfläche gerichtet ist, und eine zweite Oberfläche (24), die mindestens teilweise nach oben gerichtet ist, aufweist, wobei das Basiselement (2) entweder ein Befestigungselement (18) umfasst oder an diesem fixiert/befestigt ist,
- eine Schicht (6) aus einem thermoplastischen Material, die eine erste Oberfläche (8) und eine gegenüberliegende zweite Oberfläche (10) aufweist, und wobei mindestens eine Oberfläche (8, 10) der Schicht (6) aus thermoplastischem Material mit mindestens einer Oberfläche (4, 24) des Basiselements (2) in Kontakt steht,
wobei die Trägereinheit (100) ferner ein elektrisches Heizelement (12) umfasst, wobei das elektrische Heizelement (12) an und in Kontakt mit der ersten (8) oder zweiten (10) Oberfläche der Schicht (6) aus thermoplastischem Material angeordnet ist und konfiguriert ist, um das thermoplastische Material zu schmelzen.

2. Trägereinheit (100) nach Anspruch 1, wobei das Basiselement (2), oder mindestens dessen dem elektrischen Heizelement am nächsten liegende Oberfläche, aus einem Material besteht, das einer Temperatur T von mindestens 150 °C oder mindestens 200 °C, wie 250 °C oder mehr, wie 300 °C oder mehr, zum Beispiel 350 °C oder mehr, z. B. 400 °C oder mehr, wie 450 °C oder mehr, wie 500 °C oder mehr, standhalten kann.

3. Trägereinheit (100) nach einem der vorhergehenden Ansprüche, wobei die erste Oberfläche (4) des Basiselements (2) eine Fläche zwischen 25 und 2500 cm², wie zwischen 50 und 2000 cm² aufweist, zum Beispiel 75 - 1500 cm², z. B. 100 - 1250 cm², zum Beispiel 150 - 1000 cm², z. B. 200 - 900 cm², zum Beispiel 300 - 800 cm², wie 400 - 700 cm² oder 500 - 600 cm².

4. Trägereinheit (100) nach einem der vorhergehenden Ansprüche, wobei das elektrische Heizelement (12) an der zweiten Oberfläche (10) der Schicht (6) aus thermoplastischem Material mittels Einpressen in das Material oder mittels Befestigen an der Schicht aus thermoplastischem Material mit einem Klebstoff angeordnet ist.

5. Trägereinheit (100) nach einem der vorhergehenden Ansprüche, wobei das Material für die Schicht (6) aus thermoplastischem Material ausgewählt ist aus der Gruppe von folgenden Materialien: bitumenbasierte Polymere wie Bitumen selbst, polyacrylatbasiertes thermoplastisches Polymer, polyetherbasiertes thermoplastisches Polymer, polysulfonbasiertes thermoplastisches Polymer, polyesterbasiertes thermoplastisches Polymer, vinylbasiertes Polymer, Mischungen davon und/oder Copolymere davon.

6. Trägereinheit (100) nach einem der vorhergehenden Ansprüche, wobei die Schicht (6) aus thermoplastischem Material Abmessungen, d. h. eine Fläche und eine Geometrie, aufweist, um sich vollständig oder teilweise über den äußeren Umfang der ersten Oberfläche (4) des Basiselements (2) hinaus oder oberhalb von diesem zu erstrecken.

7. Trägereinheit (100) nach einem der vorhergehenden Ansprüche, wobei das Befestigungselement (18) eine Spindel (26), die ein Außengewinde (30) umfasst, und eine Spindelplatte (28) umfasst, die ein Innengewinde (32) umfasst, wobei das Außengewinde (30) und das Innengewinde (32) aneinander angepasst sind, wodurch die Spindelplatte (28) auf die Spindel (26) geschraubt werden kann.

8. Trägereinheit (100) nach einem der vorhergehenden Ansprüche, wobei das Basiselement (2) und/oder das Befestigungselement (18) oder mindestens ein Teil davon aus Metall oder einer Legierung, wie Eisen, Kupfer, Stahl, Messing, Bronze, hergestellt ist/sind oder aus einem Kunststoff, wie einem Thermoplast, hergestellt ist/sind, der optional in eine vorbestimmte Form spritzgegossen ist; oder aus einem Verbundwerkstoff, wie polyesterverstärkte Fasern oder epoxidverstärkte Fasern, hergestellt ist/sind; wie Glasfasern oder Kohlenstofffasern, oder aus Holz hergestellt ist/sind.

9. Trägereinheit (100) nach einem der vorhergehenden Ansprüche, umfassend eine zweite Schicht (7) aus einem thermoplastischen Material, wobei die zweite Schicht (7) aus einem thermoplastischen Material auf dem Heizelement (12) angeordnet ist, wodurch das Heizelement (12) zwischen der ersten Schicht (6) aus einem thermoplastischen Material und der zweiten Schicht (7) aus einem thermoplastischen Material oder alternativ zwischen der ersten Oberfläche (4) des Basiselements (2) und der zweiten Schicht (7) aus einem thermoplastischen Material eingefügt ist.

10. Trägereinheit (100) nach einem der vorhergehenden Ansprüche, wobei die Dicke der Schicht (6) aus thermoplastischem Material aus dem Bereich von 0,5 - 30 mm oder 1,0 - 25 mm oder 1,5 - 20 mm oder 2 - 19 mm oder 3 - 18 mm oder 4 - 17 mm, 5 - 16 mm oder 6 - 15 mm oder 7 - 14 mm oder 8 - 13 mm oder 9 - 12 mm oder 10 - 11 mm ausgewählt ist.

11. System, umfassend eine an einer nach oben gerichteten Oberfläche montierte Struktur und eine Trägereinheit nach einem der Ansprüche 1 bis 9, die zum Montieren der Struktur an der nach oben gerichteten Fläche verwendet wird.

12. Verfahren zum Befestigen einer Struktur (20) an einem nach oben gerichteten Träger, wie einem Dach, wobei das Verfahren die folgenden Schritte umfasst:
a) Bereitstellen einer oder mehrerer Trägereinheiten (100) nach einem der Ansprüche 1 bis 9;
b) in Bezug auf eine oder mehrere der einen oder mehreren Trägereinheiten (100) Anordnen der Trägereinheiten (100) auf der nach oben gerichteten Oberfläche an (einer) vorbestimmten Position(en),
c) in Bezug auf eine oder mehrere der Trägereinheiten (100) Anlegen von Strom an das elektrische Heizelement (12), der ausreicht, um mindestens einen Teil der Schicht (6) aus einem thermoplastischen Material der Trägereinheit (100) und soweit vorhanden einer zweiten Schicht (7) aus thermoplastischem Material der Trägereinheit (100) zu schmelzen,
d) in Bezug auf eine oder mehrere der Trägereinheiten (100) Ermöglichen, dass sich der geschmolzene Teil der Schicht (6) aus thermoplastischem Material der Trägereinheit (100) und soweit vorhanden der zweiten Schicht (7) aus thermoplastischem Material der Trägereinheit (100) mit der nach oben gerichteten Oberfläche verbindet;
e) in Bezug auf eine oder mehrere der Trägereinheiten (100) Ermöglichen, dass sich der geschmolzene Teil der Schicht (6) aus thermoplastischem Material der Trägereinheit (100) und soweit vorhanden der zweiten Schicht (7) aus thermoplastischem Material der Trägereinheit (100) abkühlt und dadurch mindestens teilweise härtet,
f) in Bezug auf eine oder mehrere der Trägereinheiten (100) Abschalten des Stroms an dem elektrischen Heizelement (12),
g) Montieren der Struktur (20) auf einer oder mehreren der Trägereinheiten (100).

## Revendications

1. Unité de support (100) pour le montage d'une structure sur une surface orientée vers le haut, comprenant :
- un élément de base (2) comprenant une plaque de base (22) ayant une première surface (4) orientée vers le bas en direction d'une surface de support et une seconde surface (24) orientée au moins partiellement vers le haut, lequel élément de base (2) comprend ou est fixé/attaché à un élément de fixation (18),
- une couche (6) d'un matériau thermoplastique ayant une première surface (8) et une seconde surface (10) opposée, et au moins une surface (8, 10) de la couche (6) de matériau thermoplastique étant en contact avec au moins une surface (4, 24) de l'élément de base (2),
l'unité de support (100) comprenant en outre un élément chauffant électrique (12), lequel élément chauffant électrique (12) est disposé au niveau de la première (8) ou de la seconde (10) surface de la couche (6) de matériau thermoplastique et en contact avec celle-ci et est conçu pour faire fondre le matériau thermoplastique.

2. Unité de support (100) selon la revendication 1, dans laquelle l'élément de base (2), ou au moins la surface la plus proche de l'élément chauffant électrique de celui-ci, est fait dans un matériau capable de résister à une température T d'au moins 150 °C ou d'au moins 200 °C, telle que 250 °C ou plus, telle que 300 °C ou plus, par exemple 350 °C ou plus, par exemple 400 °C ou plus, telle que 450 °C ou plus, telle que 500 °C ou plus.

3. Unité de support (100) selon une quelconque revendication précédente, dans laquelle la première surface (4) de l'élément de base (2) a une aire comprise entre 25 et 2 500 cm², par exemple entre 50 et 2 000 cm², par exemple entre 75 et 1 500 cm², par exemple entre 100 et 1 250 cm², par exemple entre 150 et 1 000 cm², par exemple entre 200 et 900 cm², par exemple entre 300 et 800 cm², par exemple entre 400 et 700 cm² ou entre 500 et 600 cm².

4. Unité de support (100) selon une quelconque revendication précédente, dans laquelle l'élément chauffant électrique (12) est disposé sur la seconde surface (10) de la couche (6) de matériau thermoplastique en étant enfoncé dans ledit matériau ou en étant fixé à ladite couche de matériau thermoplastique à l'aide d'un adhésif.

5. Unité de support (100) selon une quelconque revendication précédente, dans laquelle le matériau destiné à la couche (6) de matériau thermoplastique est choisi dans le groupe de matériaux suivants : polymères à base de bitume tels que le bitume lui-même, polymère thermoplastique à base de polyacrylate, polymère thermoplastique à base de polyéther, polymère thermoplastique à base de polysulfone, polymère thermoplastique à base de polyester, polymère à base de vinyle, mélanges de ceux-ci et/ou copolymères de ceux-ci.

6. Unité de support (100) selon une quelconque revendication précédente, dans laquelle la couche (6) de matériau thermoplastique a des dimensions, c'est-à-dire une aire et une géométrie telles qu'elle s'étend entièrement ou partiellement au-delà ou au-dessus de la circonférence extérieure de la première surface (4) dudit élément de base (2).

7. Unité de support (100) selon une quelconque revendication précédente, dans laquelle l'élément de fixation (18) comprend une broche (26) comprenant un filetage externe (30) et une plaque de broche (28) comprenant un filetage interne (32), lequel filetage externe (30) et lequel filetage interne (32) sont adaptés l'un à l'autre, permettant ainsi de visser ladite plaque de broche (28) sur ladite broche (26).

8. Unité de support (100) selon une quelconque revendication précédente, dans laquelle l'élément de base (2) et/ou ledit élément de fixation (18), ou au moins une partie de celui-ci, est/sont en métal ou en alliage, tel que le fer, le cuivre, l'acier, le laiton, le bronze, ou est/sont en plastique, tel qu'un thermoplastique, éventuellement moulé par injection selon une forme prédéterminée ; ou est/sont en matériau composite tel que des fibres renforcées par du polyester ou des fibres renforcées par de l'époxy ; telles que des fibres de verre ou des fibres de carbone, ou est/sont en bois.

9. Unité de support (100) selon l'une quelconque des revendications précédentes, comprenant une seconde couche (7) d'un matériau thermoplastique, laquelle seconde couche (7) de matériau thermoplastique est disposée sur l'élément chauffant (12), emprisonnant ainsi ledit élément chauffant (12) entre la première couche (6) d'un matériau thermoplastique et la seconde couche (7) de matériau thermoplastique ou, en variante, entre la première surface (4) de l'élément de base (2) et la seconde couche (7) de matériau thermoplastique.

10. Unité de support (100) selon l'une quelconque des revendications précédentes, dans laquelle l'épaisseur de la couche (6) de matériau thermoplastique est choisie dans la plage de 0,5 à 30 mm, ou de 1,0 à 25 mm, ou de 1,5 à 20 mm, ou de 2 à 19 mm, ou de 3 à 18 mm, ou de 4 à 17 mm, de 5 à 16 mm, ou de 6 à 15 mm, ou de 7 à 14 mm, ou de 8 à 13 mm, ou de 9 à 12 mm, ou de 10 à 11 mm.

11. Système comprenant une structure montée sur une surface orientée vers le haut et une unité de support selon l'une des revendications 1 à 9 utilisée pour monter la structure sur la surface orientée vers le haut.

12. Procédé de fixation d'une structure (20) à un support orienté vers le haut tel qu'un toit, ledit procédé comprenant les étapes consistant à :
a) fournir une ou plusieurs unités de support (100) selon l'une quelconque des revendications 1 à 9 ;
b) en ce qui concerne une ou plusieurs desdites une ou plusieurs unités de support (100), disposer lesdites unités de support (100) sur la surface orientée vers le haut dans une ou plusieurs positions prédéterminées,
c) en ce qui concerne une ou plusieurs desdites unités de support (100), appliquer à l'élément chauffant électrique (12) une puissance électrique suffisante pour faire fondre au moins une partie de la couche (6) d'un matériau thermoplastique de l'unité de support (100) et de toute seconde couche (7) de matériau thermoplastique de l'unité de support (100) si elle est présente,
d) en ce qui concerne une ou plusieurs desdites unités de support (100), permettre à ladite partie fondue de la couche (6) de matériau thermoplastique de l'unité de support (100) et de la seconde couche (7) de matériau thermoplastique de l'unité de support (100) si elle est présente, de se lier à la surface orientée vers le haut ;
e) en ce qui concerne une ou plusieurs des unités de support (100), permettre à ladite partie fondue de la couche (6) de matériau thermoplastique de l'unité de support (100) et de la seconde couche (7) de matériau thermoplastique de l'unité de support (100) si elle est présente, de refroidir et ainsi de durcir au moins partiellement ,
f) en ce qui concerne une ou plusieurs des unités de support (100), couper l'alimentation électrique de l'élément chauffant électrique (12),
g) monter la structure (20) au-dessus d'une ou plusieurs des unités de support (100).
